Europäisches Patentamt

(19) European Patent Office

Office européen des brevets

(11) Publication number: **0 152 513**
**B1**

(12) **EUROPEAN PATENT SPECIFICATION**

(45) Date of publication of patent specification: **09.01.91**

(51) Int. Cl.⁵: **F 02 M 35/024, B 01 D 46/52**

(21) Application number: **84103845.8**

(22) Date of filing: **18.02.82**

(60) Publication number of the earlier application in accordance with Art. 76 EPC: **0 059 562**

(54) Filter element for fluid cleaner systems.

(30) Priority: **23.02.81 JP 25140/81**
**23.02.81 JP 25141/81**
**25.02.81 JP 27242/81**
**28.10.81 JP 172429/81**
**28.10.81 JP 172430/81**
**28.10.81 JP 172431/81**

(43) Date of publication of application:
**28.08.85 Bulletin 85/35**

(45) Publication of the grant of the patent:
**09.01.91 Bulletin 91/02**

(84) Designated Contracting States:
**DE FR GB**

(56) References cited:
**FR-A- 883 049**
**GB-A- 1 551 336**

(73) Proprietor: **NIPPONDENSO CO., LTD.**
**1-1, Showa-cho**
**Kariya-shi Aichi-ken (JP)**

(72) Inventor: **Miyakawa, Susumu**
**12 Tennocho-7-chome**
**Kariya-shi (JP)**
Inventor: **Akado, Hajime**
**103 Higashishojisaku Izumicho**
**Anjo-shi (JP)**
Inventor: **Fukuta, Toshiaki**
**5-54 Sumiyoshicho-2-chome**
**Anjo-shi (JP)**
Inventor: **Taki, Yoshihiro**
**62-2 Ogatayama Narumicho**
**Midori-ku Nagoya (JP)**

(74) Representative: **Cook, Anthony John et al**
**D. YOUNG & CO. 10, Staple Inn**
**London, WC1V 7RD (GB)**

Courier Press, Leamington Spa, England.

## Description

This invention relates to a filter element for fluid cleaner systems of the kind having a cylindrical filter element suitable for use in removing miniscule particles of dust and foreign matter contained in the air drawn by suction.

Heretofore, filter elements of air cleaners for use with internal combustion engines have usually been uniformly folded elements of the chrysanthemum petal type produced by folding filter paper or non-woven cloth alternately in opposite directions. One example of this construction is seen in French Patent Specification (FR-A) No. 883049. In view of this construction, it has been necessary to increase the height if it is desired to increase the filtering area of such filter elements. This entails an increase in the size of the filter elements and hence that of the air cleaners, making it impossible to satisfy the technical demands of reducing the size and weight and prolonging the service life of engines.

In the air cleaners with such filter elements of the chrysanthemum petal type, the air to be cleaned flows in a path passing from the outer periphery of the element to the inner periphery thereof. This makes it necessary to provide a space of a relatively large volume in the outer peripheral portion and the inner peripheral portion. Because of this, the filter elements of the prior art have suffered the disadvantage that the air cleaner and hence the engine becomes large in size.

One example of a filter element made from sheet material by a folding procedure is shown in British Patent (GB-A) No. 1 551 336 of Marshall. Marshall says that in a pleated filter element the pleats may be of two different depths to promote free flow of air. Marshall illustrates a filter element in which pleats of a shallow depth are interposed between deeper pleats, so that the 'V's formed by the pleats are alternately deep and shallow. In contrast, the present invention aims to provide a folded filter element in which greater and lesser distances separating the fold lines alternate so as to provide a generally annular filter element whose overall shape is such that its opposite ends are tilted outwardly and either upwardly or downwardly, with the intention of achieving a combination of two advantages, namely exposure of a large area of filtering material to the air or other fluid passing and a relatively low overall height for the fluid cleaner system.

According to the invention, there is provided a filter element for filtering fluid, the filter element being of generally annular form of wave form along a cross-section thereof and being formed by folding a trapezoidal or sectoral filter sheet along a plurality of spaced straight or arcuate fold lines generally parallel to a straight or arcuate base line of the trapezoidal or sectoral filter sheet so as to provide a plurality of fold sections, characterized in that said fold sections are each defined by two adjacent fold lines so placed that fold sections having a greater width and fold sections having a lesser width appear alternately, whereby respective lines forming upper and lower edges of said annular filter element create an overall shape of said filter element which has upper and lower sides inclined from the inner to the outer edges.

The invention will now be described by way of example with reference to the accompanying drawings, in which:

Figures 1-5 illustrate environments in which the invention may be employed; Figure 1 being a sectional view of a fluid cleaner system having a support structure;

Figures 2 to 4 are perspective views of a receiver frame, keep frame and support frame respectively of the fluid cleaner system shown in Figure 1;

Figure 5 is a sectional view of a different fluid cleaner system;

Figure 6 is a plan view of the filter material in explanation of another form of filter element;

Figure 7 is a perspective view, with certain parts being cut out, of a filter element according to an example of the present invention produced by using the filter material shown in Figure 6;

Figure 8 is a sectional view of a filter element comprising the filter element shown in Figure 7 and an end plate;

Figure 9 is a sectional view of the filter element assembly shown in Figure 8, incorporated in an air cleaner system of an internal combustion engine;

Figure 10 is a sectional view of another end plate;

Figure 11 is a sectional view of a filter element connected to an end plate by mechanical means;

Figure 12 is a sectional view of the assembly of the filter element shown in Figure 7 and an end plate; and

Figure 13 is a sectional view of an air cleaner system comprising the filter element assembly shown in Figure 12.

The invention will now be described in more detail by referring to the accompanying drawings.

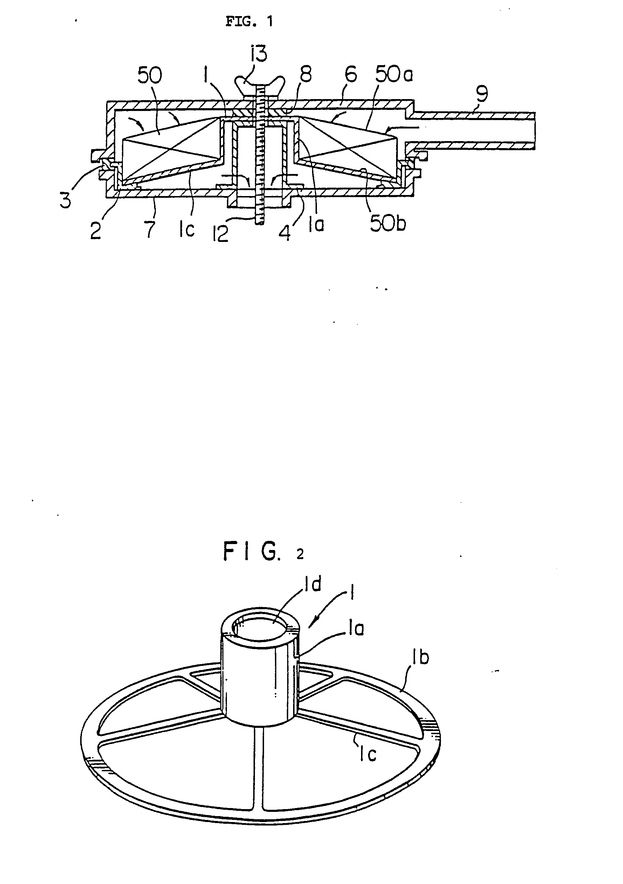

Referring to Figure 1, a filter element 50 of frusto-conical form is formed so that its opposite ends 50a and 50b are parallel to each other but tilt outwardly and downwardly with respect to the axis of the filter.

The filter element 50 allows the polluted air to flow through the filter material to filter out the dust and foreign material.

Figs. 2 to 4 show a support structure for the filter element of Figure 1. More specifically, Fig. 2 shows a ring-shaped receiver frame 1 (formed of resin, metal, etc.) including a cylindrical portion 1a for winding the folded filter material strip thereabout, a ring-shaped seat 1b and a radial support 1c. The radial support 1c is, as clearly shown in Fig. 1, tilting obliquely upwardly along one end 50b of the filter element 50 which is placed on the seat 1b and support 1c of the receiver frame 1 as shown in Fig. 1. The filter element 50 is adhesively connected to a portion 1a of the receiver frame 1.

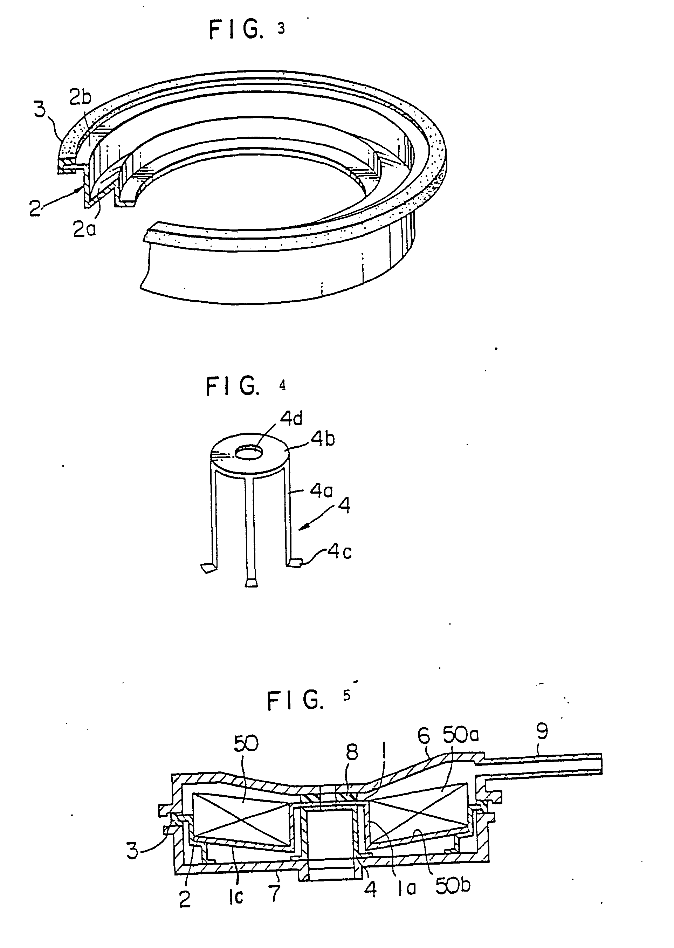

A ring-shaped keep frame 2 (formed of resin, metal, etc.) is shown in Fig. 3. This is adhesively connected at an annular groove 2a thereof to the outer periphery of the receiver frame 1 and has a ring-shaped gasket 3 formed of resilient material, such as rubber or resin, fitted or adhesively connected to a flange 2b at the outer periphery of the keep frame 2. A support frame 4 is fitted within the cylindrical portion 1a of the receiver frame 4 and includes, as shown in Fig. 4, three legs 4a and a disc-shaped portion 4b, for example. The support frame 4 is joined by welding to a case 7 at a forward end 4c of each of the legs 4a, as shown in Fig. 1.

In assembling the filter element 50, the cylindrical portion la of the receiver frame 1 is supported on the disc-shaped portion 4b of the support frame 4 and the keep frame 2 is placed on the bottom of the case 7, and then the gasket 3 on the keep frame 2 is held between the case 7 and a cap 6, as shown in Fig. 1. A ring-shaped gasket 8 (formed of rubber or resin) is interposed between the cylindrical portion 1a of the receiver frame 1 and the cap 6, and a bolt 12 (Fig. 1) secured to a carburettor, not shown, is threadably inserted in an opening 1d formed in the receiver frame land an opening 4d formed in the support frame 4 and clamped by a butterfly nut 13, to complete the assembly of a fluid cleaner system.

In the aforesaid fluid cleaner system, the polluted air flows, as shown by arrows in Fig. 1, through an inlet 9 into a space defined between the cap 6 and case 7, and then through the cylindrical filter element 50 so that the filter material thereof removes dust and foreign matter therefrom. The air cleaned in this way flows out between the legs 4a of the support frame 4, to be led to the carburettor.

The filter element 50 has its opposite ends 50a and 50b tilted outwardly and downwardly with respect to the axis of the filter element 50. Because of this, the air flowing at the inlet of the filter element 50 toward the center thereof is reduced in volume because the gap between the cap 6 and the end 50a of the filter element 50 is small, and the air flowing at the outlet thereof toward the center is increased because the gap between the case 7 and the end 50b of the filter element 50 is large. Thus the flow velocity of air moving at the opposite ends 50a and 50b of the filter element 50 can be made substantially constant and the height of the fluid cleaner system can be minimized, thereby enabling an overall compact size to be obtained in a fluid cleaner system.

By tilting the opposite boundaries or ends 50a and 50b of the filter element 50, the space between the cap 6 and case 7 can be increased in area to allow the air to flow therethrough, as described hereinabove. This enables the cap 6 and case 7 to be depressed towards each other to avoid interference with other parts.

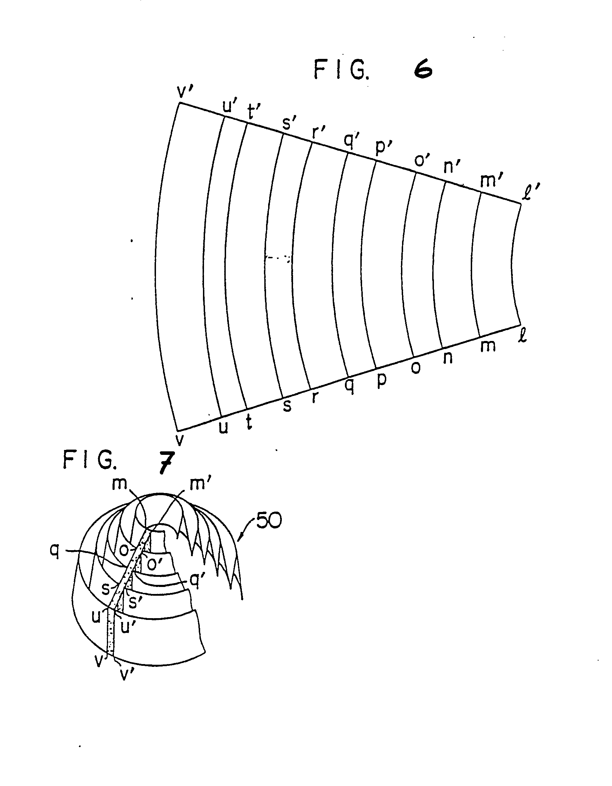

Fig. 5 shows another form of the filter element in which the opposite ends 50a and 50b are upwardly inclined.

It is possible to form a filter element according to the present invention by folding a sheet of filter material of a trapezoidal shape. This is bent and folded along parallel lines and is then wound and connected at opposite ends by an adhesive agent to form a generally annular filter element. When a filter material of trapezoidal shape is used as a starting material, tilting of the opposite ends 50a and 50b (as illustrated in Figs. 1 and 5) of the filter element 50 is obtained by alternating the spacing intervals of the fold lines.

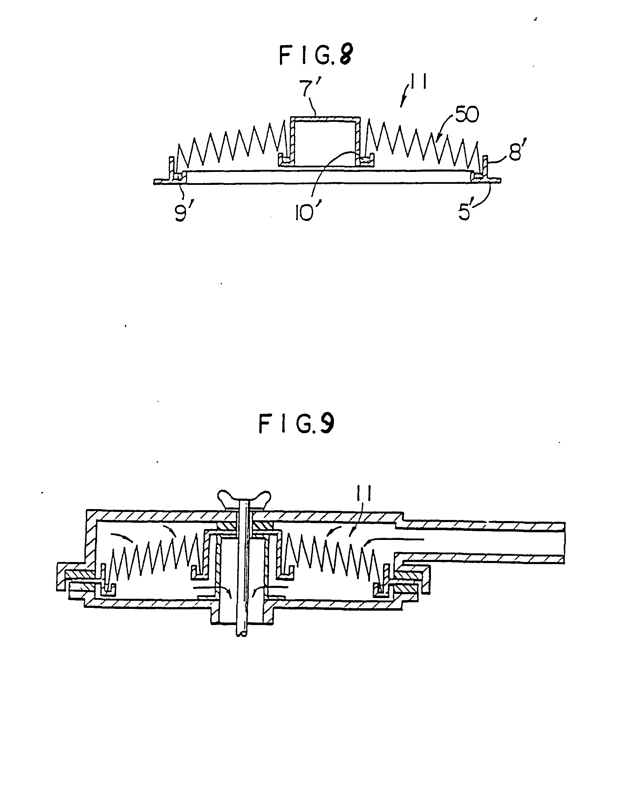

By using a filter material of a sectoral shape (Figure 6) in place of a trapezoidal shape filter material it is possible to wind the filter material more readily than the filter material if the fold lines L-L' to V-V' are made arcuate corresponding to the sectoral shape, instead of straight lines.

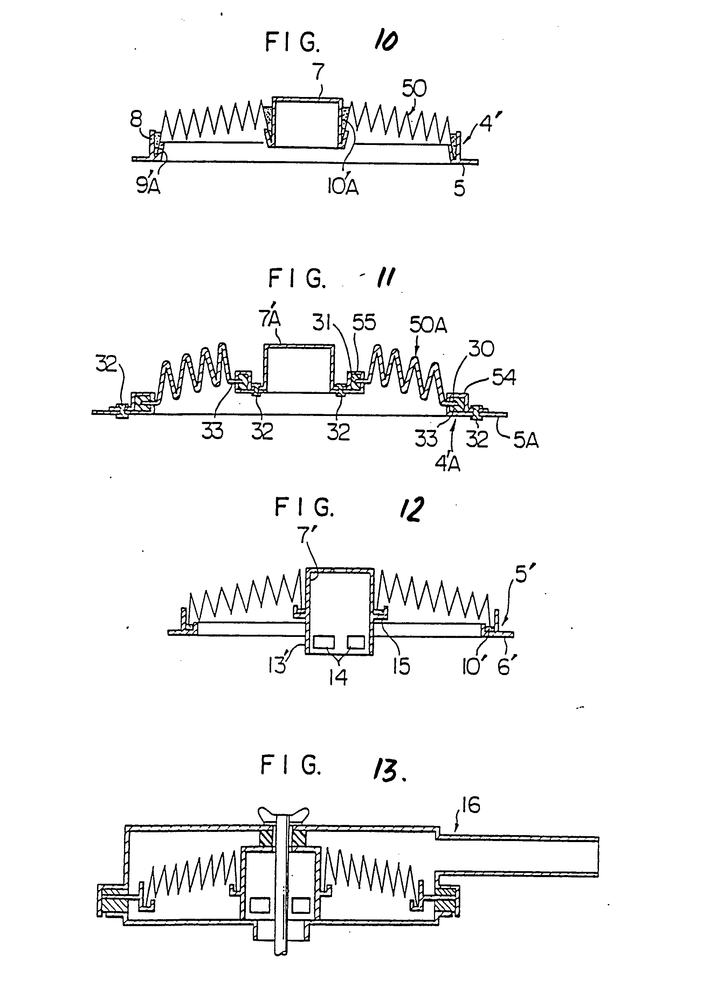

Support structures using various constructional forms of end plates will now be described. When an end plate is used, the distance between the outer two curved lines and the distance between the inner two curved lines of the filter material shown in Fig. 6 are made greater than the distance between other two curved lines thereof to provide a filter element 50 as shown in Fig. 7 to facilitate adhesion of an end plate as shown in Fig. 8.

Fig. 8 shows an end plate for attaching the filter element 50 thereto. The end plate is formed of material of light weight, such as a synthetic resinous material, which is easy to form into a shape. The end plate includes a circular flange 5', and a hub 7' connected to the flange 5' through webs. The flange 5' has an annular upstanding wall 8' formed integrally thereon and extending peripherally and having a groove 9' extending annularly along the wall 8'. The hub 7' has an annular groove 10' formed along the outer periphery thereof and extending concentrically with the groove 9', so that the filter element 50 has its outermost peripheral portion and innermost peripheral portion received in the grooves 9' and 10' respectively. An adhesive agent is filled in the grooves 9' and 10' after the outermost peripheral portion and the innermost peripheral portion of the filter element 50 are inserted therein, to seal the filter element 50 as well as to adhesively connect same to the support structure.

The filter element assembly formed as aforesaid is incorporated in an air cleaner of an automotive vehicle shown in Fig. 9.

Fig. 10 shows another constructional form of support structure in which the grooves 9'A and 10'A at the outer periphery and the inner periphery respectively of the end plate 4' are each in the form of a letter V in cross-section to conform to the tilting of the outermost peripheral fold and the innermost peripheral fold of the filter element 50.

Fig. 11 shows a support structure in which the filter element 50A is sealingly mounted on the support structure by other means than using an adhesive agent, such as mechanically. In this constructional form, the filter element 50A is formed with flanges 33 at the outer peripheral and the inner periphery respectively thereof having resilient gaskets 30 and 31 formed integrally therewith which are connected to flanges 4'A of the end plate 4' and the outer periphery of the hub 7'A through rivets 32 and plates 54 and 55 to provide a seal to the filter element 50A.

Figs. 12 and 13 show a modification of the end plate. When the filter element 50 shown in Fig. 7 is attached to an end plate having a flange 6', the filter element assembly 5' shown in Fig. 12 is obtained. As is clearly shown in Fig. 12, a lower end 13' of the hub 7' extends downwardly of the level of the flange 6' and is formed at its side with a plurality of openings 14. A groove 15 is formed around the entire periphery of the hub 7' in a position above the openings 14. The groove 15 is a concentric with the groove 10' formed on the inner surface of the upstanding wall. A filter element assembly of this construction is incorporated in an air cleaner 16 as shown in Fig. 13.

In the embodiments and modifications of the invention shown and described hereinabove, the filter element assembly has been described as being incorporated in an air cleaner of an automotive vehicle. However, the invention is not limited to a filter element exclusively for use with an air cleaner of an automotive vehicle. The invention can, of course, be employed in a fuel oil cleaner or other cleaners for use in air conditioning systems.

**Claims**

1. A filter element for filtering fluid, the filter element being of generally annular form of wave form along a cross-section thereof and being formed by folding a trapezoidal or sectoral filter sheet along a plurality of spaced straight or arcuate fold lines (A-A', B-B' etc) generally parallel to a straight or arcuate base line of the trapezoidal or sectoral filter sheet (5) so as to provide a plurality of fold sections, characterized in that said fold sections are each defined by two adjacent fold lines so placed that fold sections having a greater width and fold sections having a lesser width appear alternately, whereby respective lines forming upper and lower edges of said annular filter element create an overall shape of said filter element which has upper and lower sides inclined from the inner to the outer edges.

2. A filter element as claimed in claim 1, wherein even numbered fold sections of said fold sections thereof have the same width and odd numbered fold sections thereof have the same width.

3. A filter element as claimed in claim 1 or 2, wherein the widths of the innermost and the outermost fold sections are larger than those of the intermediate fold sections.

**Patentansprüche**

1. Filterelement zur Filterung von Fluiden, wobei das Filterelement im wesentlichen ringförmig und entlang eines Querschnitts wellenförmig ist, sowie mittels Falten eines trapezförmigen oder sektorförmigen Filterblattes entlang einer Mehrzahl von beabstandeten geraden oder bogenförmigen Faltlinien (A-A', B-B' etc.) erzeugt wird, die im wesentlichen parallel zu einer geraden oder bogenförmigen Grundlinie des trapezförmigen oder sektorförmigen Filterblatts (5) sind, um eine Mehrzahl von Faltabschnitten vorzusehen, dadurch gekennzeichnet, daß jeder der Faltabschnitte durch zwei benachbarte Faltlinien definiert wird, die so angeordnet sind, daß Faltbereiche mit größerer Breite und Faltbereiche mit geringerer Breite abwechselnd erscheinen, wobei die jeweiligen Linien, die den oberen und den unteren Rand des Filterelements bilden, eine Gesamtform des Filterelements erzeugen, bei der die obere und untere Seite von der Innenkante zur Außenkante geneigt ist.

2. Filterelement nach Anspruch 1, dadurch gekennzeichnet, daß von den Faltabschnitten die gerade nummerierten Faltabschnitte die gleiche Breite und die ungerade nummerierten Faltabschnitte die gleiche Breite haben.

3. Filterelement nach Anspruch 1 oder 2, dadurch gekennzeichnet, daß die Breite der innersten und der äußersten Faltabschnitte größer als die der dazwischenliegenden Faltabschnitte ist.

**Revendications**

1. Elément filtrant destiné à filtrer un fluide, l'élément filtrant étant généralement annulaire, ondulé sur sa section transversale et réalisé par pliage d'une feuille filtrante trapézoïdale ou à secteurs le long de plusieurs lignes de pliage espacées, droites ou arquées (A-A', B-B' etc.) de façon générale parallèles à une ligne de base droite ou arquée de la feuille filtrante trapézoïdale ou à secteurs (5) pour donner un ensemble de sections de pliage, caractérisé en ce que les sections de pliage sont respectivement définies par deux lignes de pliage contiguës, placées de façon que les sections de plis de grande largeur et les sections de plis de petite largeur apparaissent alternativement, les lignes respectives formant les bords supérieur et inférieur de l'élément filtrant annulaire créant une configuration d'ensemble d'éléments filtrants qui comportent des côtés supérieur et inférieur inclinés à partir du bord intérieur au bord extérieur.

2. Elément filtrant selon la revendication 1, dans lequel les sections de pliage de nombre pair présentent la même largeur et les sections de pliage de nombre impair présentent la même largeur.

3. Elément filtrant selon la revendication 1 ou 2, dans lequel les largeurs des sections de pliage les plus intérieures et des sections de pliage les plus extérieures sont supérieures à celles des sections intermédiaires de pliage.

FIG. 1

FIG. 2

FIG. 3

FIG. 4

FIG. 5

FIG. 6

FIG. 7

# F I G. 8

# F I G. 9

FIG. 10

FIG. 11

FIG. 12

FIG. 13